# EUROPEAN PATENT SPECIFICATION

(11) **EP 0 883 236 B1**
(45) Date of publication and mention of the grant of the patent: **07.12.2005**
(21) Application number: 97303724.5
(22) Date of filing: 02.06.1997
(51) Int. Cl.: H02P 7/00, H02P 7/29, H02P 1/04, H02P 7/74

(54) **Driving circuit system constituted by multiple DC power driving devices of DC or AC motors in mixture of series and parallel combinations**
Steuerungsschaltung mit mehreren Gleichstrom-Steuerungsvorrichtungen von Gleichstrom- oder Wechselstrommotoren in Kombinationen von Reihen- und Parallelschaltungen.
Circuit de commande constitué de plusieurs dispositifs de commande à courant continu de moteurs à courant continu ou alternatif combinés en série ou en parallèle ou en mélange des deux

(43) Date of publication of application: 09.12.1998
(73) Proprietor: Yang, Tai Her, Si-Hu Town, Dzan Hwa (TW)
(72) Inventor: Yang, Tai Her, Si-Hu Town, Dzan Hwa (TW)
(74) Representative: Wright, Howard Hugh Burnby

(56) References cited:
- EP-A- 0 248 747
- US-A- 5 418 436
- DATABASE WPI Section EI, Week 7916 Derwent Publications Ltd., London, GB; Class X13, AN 79-D5065B XP002044683 & SU 609 198 A (NOVOS ELECTROTECH) , 10 May 1978
- DATABASE WPI Section EI, Week 9430 Derwent Publications Ltd., London, GB; Class V06, AN 94-247499 XP002044684 & SU 1 814 182 A (RIGA WAGON WKS) , 7 May 1993

## Description

### SUMMARY OF THE INVENTION

The driving circuit system constituted by the multiple DC power driving devices of the DC or AC motors in mixture of series and parallel combinations, wherein it is characterized in that the DC power driving device (including armatures or field windings) of the conventional AC or DC synchronous motors or DC alternator type motors are staged controlled in series or parallel combinations as well as operated in continuous mixing control from series to parallel combination thereby to control the rotation speed, turning torque and output power of motors.

U.S. 5,418,436 discloses a system for starting and operating an electric motor, such as a spindle motor of a disk drive assembly, employing a segmented stator winding in which the segments are connectable in parallel and in series for using and for starting a motor, respectively.

In accordance with the invention, there is provided a driving circuit system for at least two electrical motors, comprising: at least two driving devices arranged to drive the at least two motors, said at least two driving devices being connected to each other and to a DC power source by a series connection and a parallel connection, said series connection including a first solid state switching component and said parallel connection including a second solid state switching component, and a control device for causing said first and second solid state switching components to switch between a state in which said driving devices are series connected and a state in which said driving devices are parallel connected wherein said control device operates said switching components by pulse width modulation, an overall power consumption of the motors being controlled by modulating the pulse width applied to the switching components, and therefore the duty cycle by which the system is switched between series and parallel combinations.

### BRIEF DESCRIPTION OF THE DRAWINGS

Figure 1 is the two stage type basic circuit example of the invention.
Figure 2 is an example of the invention illustrating that the electromechanical switches constitute a series combined control circuit.
Figure 3 is an application example of the invention constituted by six DC power driving devices of the controlled motors.

### DETAILED DESCRIPTION OF THE INVENTION

The DC or AC synchronous motors using DC auxiliary exciting magnetic poles are widely applied in driving machines or industrial equipment as well as in driving various electrical carriers or public transportation carriers due to its low cost, good operating performances, high efficiency, and easy control; thereof in conventional arts, switching between the multiple series and parallel combined motors have high reliability and good effect as is usually seen in the speed control of railed electrical cars; however they can only provide multi-stage changes in series, parallel or mixed combinations but not the continuous linear control, though the intermediate discontinuous sections can be adjusted by variable resistors, the resistors have high heat loss as well as have negative effect on the electromechanical characteristics; Therefore the circuit which possesses a good continuous adjustment between the stages of series, parallel or mixture of series and parallel combinations as well as an economic efficiency and a good structure, whereby the solid state active control components are used to improve the disadvantages of short life and high cost of the conventional series and parallel switching electromechanical components, hereby The driving circuit system constituted by the multiple DC power driving devices of the DC or AC motors in mixture of series and parallel combinations is disclosed innovatively based on the aforesaid background, wherein the said circuit is mainly comprised of the following:
- A DC power source: It is the supplier of the physical or chemical energies converted into electric power from batteries, solar energy, generators or rectified AC power sources;
- The DC power driving device of controlled motor: It is constituted by two or more than two independent motors or two or more than two field windings or two or more than two armatures of the same motor whereby to be controlled by the switching components for series or parallel combinations, or proportional mixing control between the two combinations, thereof the controlled power driving device is comprised of armatures of DC electrical machines with permanent magnet type field or DC shunt excited DC motors with excited winding type fields; or are controlled by the series excited windings or armatures or both of the series excited or commutator winding type compound excited electrical machines, or the series excited field winding or armature of the series excited motor is individually controlled, or both of them are controlled or constituted by other alternator type motors or constituted by the AC or DC synchronous motors with DC auxiliary excited field;
- The switching components: They are comprised of solid state switching components or linearly controllable solid state switching components, or electromechanical type switching component in particular situations or mixture of both;
- A diode: It is for current distribution hindrance or negative polarity hindrance or functioning as a flywheel diode;
- An operating control input unit: It is constituted by electromechanical or solid state electronic components to issue operating commands on the motor operating status;
- A central control unit: It is a command signals processing unit constituted by electromechanical or solid state electronic components for receiving operating commands from the command input unit to control the switching components through the driving circuit;
Through ON/OFF switching control on the switching components, the DC power driving devices of the controlled motors are controlled to changeover between series or parallel combinations; and through the PWM control on the switching components to constitute infinitely modulating control for the intermediate stages between the series and parallel combinations and the mixture of both combinations; in addition, for the switching components adopted with controllable internal resistors, the infinitely stage-less control operation can be also achieved.

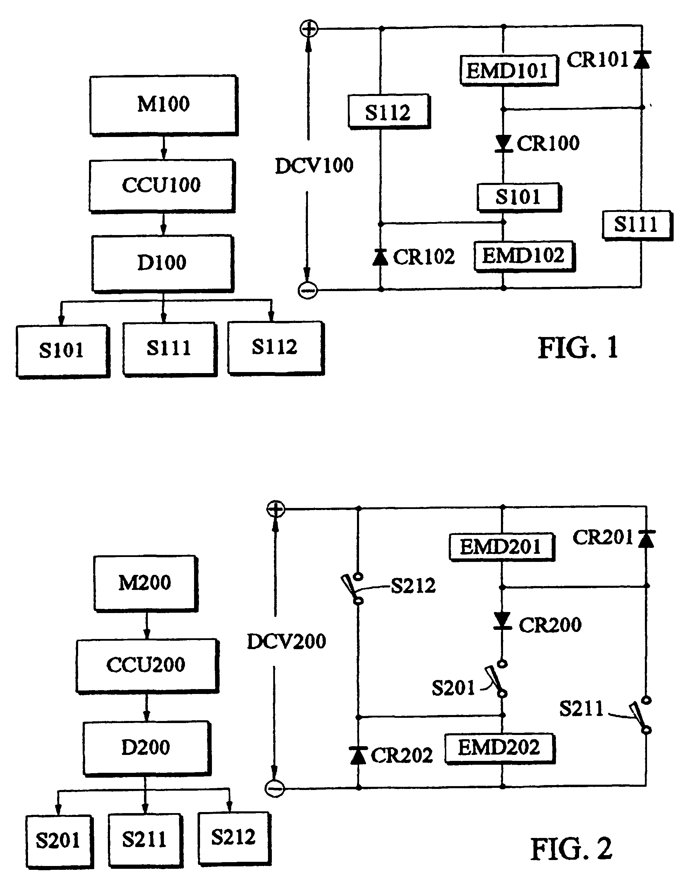

Figure 1 is the two stage type basic circuit application example of The driving circuit system constituted by the multiple DC power driving devices of the DC or AC motors in mixture of series and parallel combinations, wherein it is mainly comprised of the following:
- A DC power source DCV100: It the supplier of the physical or chemical energies converted into electric power from batteries, solar energy, generators or rectified AC power sources; .
- The DC power driving devices EMD101, EMD102 of the controlled motors: They are constituted by two or more than two independent motors or two or more than two field windings or two or more than two armatures of the same motor whereby to be controlled by the switching components for series or parallel combinations, or proportional mixing control between the two combinations, thereof the controlled power driving device is comprised of armatures of DC electrical machines with permanent magnet type field or DC shunt excited DC motors with excited winding type fields; or are controlled by the series excited windings or armatures or both of the series excited or commutator winding type compound excited electrical machines, or the series excited field winding or armature of the series excited motor is individually controlled, or both of them are controlled or constituted by other alternator type motors or constituted by the AC or DC synchronous motors with DC auxiliary excited field;
- The switching component S101 S111, S112: They are comprised of solid state switching components or linear controllable solid state switching components , or electromechanical type switching component in particular situations or mixture of both; wherein the switching component S101 and diode CR100 are series combined between the DC power driving devices EMD101 and EMD102 to be used as the barrier diode, whereof the order of series combination is power source positive terminal → EMD101 positive terminal→ EMD101 negative terminal → CR100 positive terminal → CR100 negative terminal → S101 positive terminal → S101 negative terminal → EMD102 positive terminal → EMD102 negative terminal → power source negative terminal;
- The diodes CR100, CR101, CR102: As aforesaid, The diode CR100 is series combined in current direction between the DC power driving device EMD101 of the controlled motor and the switching component S101 to function as a barrier diode; the diode CR101 is parallel combined between the two ends of the DC power driving device EMD101 of the controlled motor to function as a flywheel diode, wherein its positive terminal is connected to the intersecting point of the DC power driving device EMD101 of the controlled motor and the switching component S111, while its negative terminal and the positive terminal of the DC power driving device EMD101 of the controlled motor are connected together to the positive terminal of the power source; thereof the diode CR102 is parallel combined with the two ends of the DC power driving device EMD102 of the controlled motor to function as a flywheel diode, whereof its negative terminal is connected to the intersecting point between the DC power driving device EMD102, and the switching components S112 and S101, while its positive terminal is connected to the intersecting point between the negative terminal of the power source, the DC power driving device EMD102 of the controlled motor and the switching component S111;
- An operating control input unit M100: It is constituted by electromechanical or solid state electronic components to issue operating commands on motor operating status;
- A central control unit CCU100: It is a command signals processing unit constituted by electromechanical or solid state electronic components for receiving operating commands from the command input unit M100 to control the switching components through the driving circuit D100;
- A driving circuit D100: It is constituted by electromechanical or solid state electromechanical or electronic components for receiving commands from the central control unit CCU100 to drive the switching components correspondingly;

The operating statuses include all or part the statuses as described in the following:
A) When the switching component S101 is at "ON" status, while S111, S112 are at "OFF" status, and the DC power driving device EMD101 and EMD102 of the controlled motors are at high impedance, low power rate operating status in series combination, the electric current is from the positive terminal through EMD101→CR100→S101→ EMD102→negative terminal;
B) When the switching component S101 is at "OFF" status (Due to the reverse barrier effect of the diode CR100, "ON" status is also fine), and S111, S112 are at "ON" status, the DC power driving devices EMD101 and EMD102 of the controlled motors are at low impedance, high power rate operating statuses in parallel combination, and the electric current is divided into two loops through the positive terminal→S112→EMD102→ negative terminal and through the positive terminal →EMD101→ S111→ negative terminal respectively, whereof each loop can execute power control on the DC power driving device of the controlled motor independently thereby to control the rotating speeds, torque values, currents or rotating directions of the respective motors for operations at the same or different statuses or with partial motors at standstill.
   For aforesaid functions stated in items (A) and (B), its switching components can be comprised of electromechanical switching components or solid state switching components, wherein when the switching components S101, S111, S112 are all at "OFF" statuses, the motor operation is stopped.
C) When the component S101 is at "ON" status thereby to perform conduction cycle PWM control on the solid state switching components S111, S112 for changes between series and parallel combinations, whereby the power rate can be continuously adjusted from series combination to parallel combination according to PWM duty cycle;
D) If the switching components S111 and S112 can be constituted by internal resistor controlled solid state linear components, then its operating power rate can be continuously controlled in linear adjustment from series combination to parallel combination;
E) By using the group of motors comprised of shunt excited field winding DC motors through the field speed change control method to fill the intervals between the various operating power rate stages thereby to obtain the characteristics of continuous linearly adjusted torque or rotating speed values;

For the aforesaid control application, the switching component S101 can be selected as following:
(C)The S101 is directly short-circuited without hindering the system operations;
(D)The S101 is comprised of electromechanical or solid state switching components thereby to allow the motor stops operation when S101, S111, S112 are all at "OFF" statuses;
(E)S101 is comprised of solid state switching component, whereof besides of constituting the total switching functions together with S111, S112, the S101 can also perform PWM control function on the motors operated in series combination for power rate variations on the output statuses of motors from standstill to mutually series combinations.
(F)If S101, S111 and S112 are all comprised of solid state components capable of performing linear control, then besides of constituting the total switching functions together with S111, S112, for motors operated in series combination, the S101 can be linearly operated to control the operating statuses of motors for power rate variations from standstill to mutual series combination.
(G)The S111 and S112 in parallel combination status can be used to provide PWM or linear driving control on the two motors for different operating power rates respectively;

Based on the aforesaid basic circuit operation, the following practical application combinations can be made :
- The current directions of the DC power driving devices of controlled motors can be simultaneously switched by the direction change switch thereby to change the rotating direction;
- The system can be enlarged to be comprised of more than two motors, relevant switching components and diodes, thereby the series to parallel combination changes can be enlarged into the mixture status of series and parallel combinations.
- The electromechanical embodying types and electromechanical characteristics of the motors can be the same or different which can be selected as required;
- Relationship between each motor and the load can be that the load is commonly driven by the motors while each motor is combined at the same shaft or through transmission components;
- Each individual load can be driven by each individual motor;

Figure 2 is an example of The driving circuit system constituted by the multiple DC power driving devices of the DC or AC motors in mixture of series and parallel combinations illustrating that the electromechanical switches constitute a series combined control circuit, wherein it is comprised of the following:
- A DC power source DCV200: it is the supplier of the physical or chemical energies converted into electric power from batteries, solar energy, generators or rectified AC power sources;
- The DC power driving devices EMD201, EMD202 of the controlled motors: They are constituted by two or more than two independent motors or two or more than two field windings or two or more than two armatures of the same motor whereby to be controlled by the switching components for series or parallel combinations, or proportional mixing control between the two combinations, thereof the controlled power driving device is comprised of armatures of DC electrical machines with permanent magnet type field or DC shunt excited DC motors with excited winding type fields; or are controlled by the series excited windings or armatures or both of the series excited or commutator winding type compound excited electrical machines, or the series excited field winding or armature of the series excited motor is individually controlled, or both of them are controlled or constituted by other alternator type motors or constituted by the AC or DC synchronous motors with DC auxiliary excited field;
- The switching component S201, S211, S212: They are driven manually or by electromagnetic force or by mechanical power or by fluid power; wherein the switching component S201 is installed between the negative terminal of the diode CR200 and the DC power driving device EMD202 of the controlled motor, one terminal of the switching component S211 and the positive terminal of the diode CR201 are commonly connected with the intersecting point between the DC power driving device EMD201 of the controlled motor and the positive terminal of the diode CR200, while the other terminal of the switching component S211 is connected to the negative terminal of the power source; one terminal of the switching component S212 and the negative terminal of the diode CR202 are commonly connected with the intersecting point between the DC power driving device EMD202 of the controlled motor and the switching component S201, while the other terminal of the switching component S212 is connected to the positive terminal of the power source;
- The diodes CR200, CR201, CR202: The diode CR200 can be installed or omitted according to operating requirement, while the negative terminal of the diode CR201 is connected with the DC power driving device EMD201 of the controlled motor and the positive terminal of the power source, whereof he positive terminal of the diode CR201, switching component S211, the DC power driving device EMD201 of the controlled motor and the positive terminal of the diode CR200 are commonly connected; the negative terminal of the diode CR202 is connected with the positive terminal of the DC power driving device EMD202, while the positive terminal of the diode CR202 is connected with the negative terminal of the power source;
- An operating control input unit M200: It is constituted by electromechanical or solid state electronic components to issue operating commands on motor operating status;
- A central control unit CCU200: It is a command signals processing unit constituted by electromechanical or solid state electronic components for receiving operating commands from the command input unit M200 to control the switching components through the driving circuit D200;
- A driving circuit D200: It is constituted by electromechanical or solid state electromechanical or electronic components for receiving commands from the central control unit CCU200 to drive the switching components correspondingly;

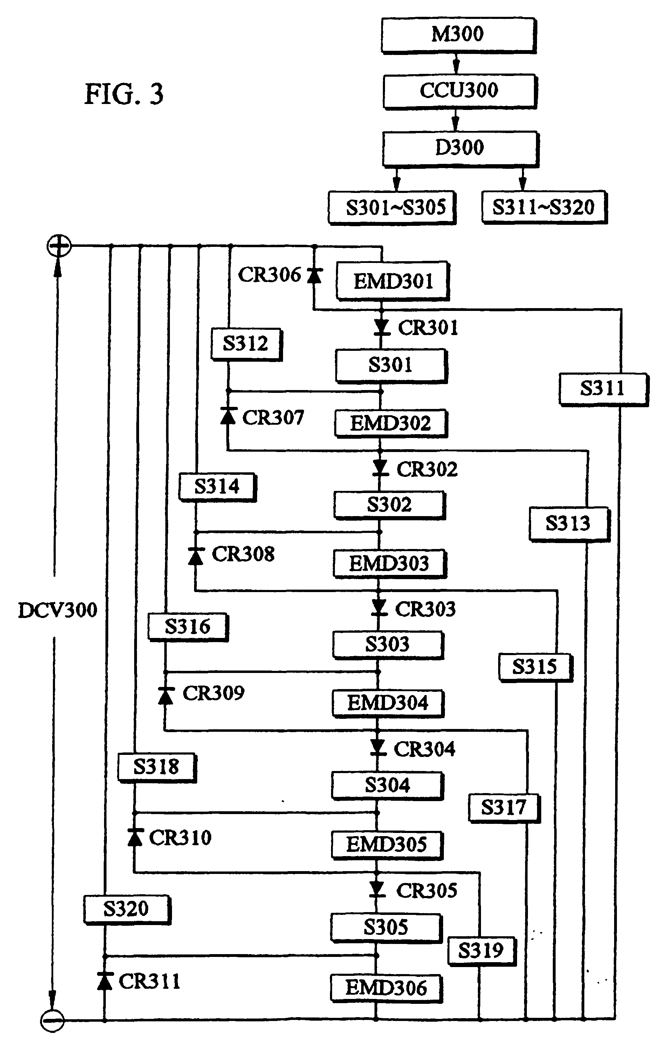

Figure 3 is the driving circuit system constituted by the multiple DC power driving devices of the DC or AC motors in mixture of series and parallel combinations, wherein it is constituted by six DC power driving devices of the controlled motors to disclose the application modes of each motor construction, whereby the application examples include series combination, parallel combination or series and parallel combinations of multiple motors according to the largest common factor combinations, thereof it is comprised of the following:
- A DC power source DCV300: it is the supplier of the physical or chemical energies converted into electric power from batteries, solar energy, generators or rectified AC power sources;
- The DC power driving devices EMD301∼EMD306 of the controlled motors: They are constituted by two or more than two independent motors or two or more than two field windings or two or more than two armatures of the same motor whereby to be controlled by the switching components for series or parallel combinations, or proportional mixing control between the two combinations, thereof the controlled power driving device is comprised of armatures of DC electrical machines with permanent magnet type field or DC shunt excited DC motors with excited winding type fields; or are controlled by the series excited windings or armatures or both of the series excited or commutator winding type compound excited electrical machines, or the series excited field winding or armature of the series excited motor is individually controlled, or both of them are controlled or constituted by other alternator type motors or constituted by the AC or DC synchronous motors with DC auxiliary excited field;
- The switching components S301~S305 and S311~S320: Wherein S301~S305, diodes CR301∼CR305 and DC power driving devices EMD301~EMD306 of the controlled motors are series combined in the same way as previously described;

The switching component S313 is cross connected between the negative terminal of the DC power driving device EMD302 and the negative terminal of the power source;

The switching component S315 is cross connected between the negative terminal of the power driving device EMD303 of the controlled motor and the negative terminal of the power source;

The switching component S317 is cross connected between the negative terminal of the power driving device EMD304 of the controlled motor and the negative terminal of the power source;

The switching component S319 is cross connected between the negative terminal of the power driving device EMD305 of the controlled motor and the negative terminal of the power source;

The switching component S312 is cross connected between the positive terminal of the power driving device EMD302 of the controlled motor and the positive terminal of the power source;

The switching component S314 is cross connected between the positive terminal of the power driving device EMD303 of the controlled motor and the positive terminal of the power source;

The switching component S316 is cross connected between the positive terminal of the power driving device EMD304 of the controlled motor and the positive terminal of the power source;

The switching component S318 is cross connected between the positive terminal of the power driving device EMD305 of the controlled motor and the positive terminal of the power source;

The switching component S320 is cross connected between the positive terminal of the power driving device EMD306 of the controlled motor and the positive terminal of the power source;
- The diodes CR301~CRr305 and CR306~CR 311: The diodes CR301~CR305, switching component S301~S305 and the DC power driving devices EMD301∼EMD306 of the controlled motors are series combined in the same way as previously described, while the diodes CR306∼CR311 are respectively parallel combined with the two terminals of each armature of the DC power driving devices EMD301∼EMD306 of controlled motors in reverse polarity with the power source thereby to constitute the flywheel diodes, thereof the negative terminal of the diode CR306 is connected with the positive terminal of EMD301, while the positive terminal of the diode CR306 is connected with the negative terminal of EMD301;

The negative terminal of diode CR307 is connected with the positive terminal of the DC power driving device EMD302 of controlled motor, while the positive terminal of CR307 is connected with the negative terminal of the DC power driving device EMD302 of controlled motor;

The negative terminal of the diode CR308 is connected with the positive terminal of EMD303, while the positive terminal of CR308 is connected to the negative terminal of EMD303;

The negative terminal of the diode CR309 is connected with the positive terminal of EMD304, while the positive terminal of CR309 is connected with the negative terminal of EMD304;

The negative terminal of the diode CR310 is connected with the positive terminal of EMD305, while the positive terminal of CR301 is connected with the negative terminal of EMD305;

The negative terminal of the diode CR311 is connected with the positive terminal of EMD306, while the positive terminal of CR311 is connected to the negative terminal of EMD306;
- An operating control input unit M300: It is constituted by electromechanical or solid state electronic components to issue operating commands on motor operating status;
- A central control unit CCU300: It is a command signals processing unit constituted by electromechanical or solid state electronic components for receiving operating commands from the command input unit M300 to control the switching components through the driving circuit D300;
- A driving circuit D300: It is constituted by electromechanical or solid state electromechanical or electronic components for receiving commands from the central control unit CCU300 to drive the switching components correspondingly;

The operating status of the embodying examples shown in figure 3 includes the following:
(C) Switching components S301~305 are at "ON" status, while S311~S320 are at "OFF" status, then EMD301∼EMD306 are series combined to commonly connect with the power source, herein, the controlled motors are at the highest impedance and lowest power rate operating status;
(D) The switching components S301, S302, S304, S305, S315 and S316 are at "ON" status, while S303, and S311~S314, S317~S320 are at "OFF" status, then EMD301~EMD303 are series combined first and then are parallel combined with the power source; EMD304∼EMD306 are series combined first and then are parallel combined with the power source, herein, the whole controlled motors are at lower power rate operating status;
(E)The switching components S301, S303, S305 and S313, S314, S317, S318 are all at "ON" status, while S302, S304, S311, S312,S315,S316,S319, S320 are at "OFF" status, then the DC power driving devices EMD301 and EMD302 are series combined first and are parallel combined with the power source; EMD305 and EMD306 are series combined first and then are parallel combined with the power source, herein the controlled motors are in middle power rate operating status;
(F)The switching components S301~S305 are at "OFF" status, while S311~S320 are at "ON" status, then each motor is individually parallel combined with the power source, herein the controlled motors are at the largest power rate operating status;
(G)The continuous linear operations of aforesaid staged power rate operating statuses in a~d can be achieved by the following methods:
   - The relative switching components at the respective operating statuses of the aforesaid a. lowest power rate operating status → b. second to the lowest power rate operating status→ c. middle power rate operating status d. largest power rate operating status are alternated to proportionally switch between two statuses thereby to achieve the characteristics of the intermediate continuous adjusted torque or rotation speed values during operation;
   - The aforesaid solid state switching components are substituted by linear power components for continuously adjusting the operating torque or rotation speed value between the two different operating power stages analytically;
   - The motors are constituted by the DC motors with shunt excited winding fields, whereby the method of field control for speed change is adopted to fill in the intervals between the aforesaid different operating power rate stages, thereby to achieve the characteristics of continuous linear adjusted torque or rotation speed values during operation;

This design is based on the principles illustrated in the aforesaid application examples, whereby through arrangements and combinations of the various switching components and motor circuits, all or part of the following functions can be obtained according to requirement:
**F1:** For motor operating function in unidirectional rotation, wherein the series combination is switched to parallel combination directly;
**F2**: For motor operating function in unidirectional rotation, wherein series combination is gradually switched to parallel combination at the largest power rate by the PWM method;
**F3:** For motor operating function in unidirectional rotation, wherein linear series combination is gradually switched to parallel combination at the largest power rate;
**F4:** For motor operating function in unidirectional rotation, wherein the motors are gradually switched from standstill to the parallel combination at the largest power rate through the PWM method as well as the series to parallel combination switching operations;
**F5:** For motor operating function in unidirectional rotation, wherein the motors are gradually switched from standstill to the parallel combination at the largest power rate through control by the switching components as well as the series to parallel combination switching operations;
**F6:** For motor and generator operating functions in bi-directional rotations, wherein the motors or generators are gradually switched from standstill to parallel combination at the largest power rate by the PWM control method;
**F7:** For motor and generator operating function in bi-directional rotations, wherein the motors or generators are gradually switched from standstill to parallel combination at the largest power rate through the control of linear components;
**F8**: For unidirectional rotations controlled by series and parallel combinations, each motor can be operated without balance;
**F9**: For bi-directional rotations controlled by series and parallel combinations, each motor can be operated without balance;
**F10:** The AC alternator type motors are controlled by the bi-directional switching components to gradually switched from standstill to parallel combinations at the largest power rate in motor operating function;
**F11:** The AC alternator type motors are controlled by the bi-directional linear switching components to gradually switched from standstill to parallel combinations at the largest power rate in motor operating function;
**F12**: The generator operating function in reverse unidirectional rotation, wherein the series combination is switched to parallel combination directly;
**F13**: The generator operating function in reverse unidirectional rotation, wherein gradually switching to parallel combination at the largest power rate is controlled by PWM method;
**F14**: The generator operating function in reverse unidirectional rotation, wherein gradually switching to parallel combination at the largest power rate is controlled by the linear components;
**F15:** The multiple embodiment types of series and parallel combinations can be adopted for common factor combinations;
**F16:** For motors operated in unidirectional rotations, wherein solid state switching components or linear components are adopted or further combined with the field control methods to control the rotation speeds, torque values, or currents of the respective motors for parallel operations in the same or different performances or with partial motors at standstill;
**F17**: For motors operated in bi-directional rotations, wherein solid state switching components or linear components are adopted or further combined with the field control methods to control the rotation speeds, torque values, or currents of the respective motors for parallel operations in the same or different performances or with partial motors at standstill;

In addition, for the case that the DC power control device of controlled motors in the motor function of this design is armature, the field excitation strength of the controlled motor can be controlled for combination use to further extend the application range of this design.

As summarized from the above descriptions, The driving circuit system constituted by the multiple DC power driving devices of the DC or AC motors in mixture of series and parallel combinations is through a particular innovated circuit structure to provide a simple but practical control functions by the series and parallel combinations multiple DC power driving devices of controlled motors.

## Claims

1. A driving circuit system (D100; D200; D300) for at least two electrical motors, comprising: at least two driving devices (EMD101, EMD102; EMD201, EMD202; EMD301, EMD302, EMD303, EMD304, EMD305, EMD306) arranged to drive the at least two motors, said at least two driving devices being connected to each other and to a DC power source' (DCV100; DCV200; DC300) by a series connection and a parallel connection, said series connection including a first solid state switching component (S101; S201; S301, S302, S303, S304, S305) and said parallel connection including a second solid state switching component (S112; S111 S211, S212; S311, S312, S313, S314, S315, S316, S317; S318, S319, S320), and a control device (CCU100; CCU200; CCU300) for causing said first and second solid state switching components (S101, S111 S112; S201, S211, S212; S301, S302, S303, S304, S305, S311, S312, S313, S314, S315, S316, S317, S318) to switch between a state in which said driving devices (EMD101, EDM102; EMD201, EMD202; EMD301, EMD302, EMD303, EMD304, EMD305, EMD306) are series connected and a state in which said driving devices are parallel connected wherein said control device (CCU100; CCU200; CCU300) operates said switching components by pulse width modulation, an overall power consumption of the motors being controlled by modulating the pulse width applied to the switching components, (S101, S111, S112; S201, S211, S212; S301, S302, S303, S304, S305, S311, S312, S313, S314, S315, S316, S317, S318, S319, S320), and therefore the duty cycle by which the system is switched between series and parallel combinations.

2. A driving circuit system (D300) as claimed in claim 1, wherein a number of said driving devices (EMD301, EMD302, EMD303, EMD304, EMD305, EMD306) is at least three, each of said at least three driving devices (EMD301, EMD302, EMD303, EMD304, EMD305, EMD306) being connected to all others of said at least three driving devices by a series connection and a parallel connection including one of said solid state switching components (S301, S302, S303, S304, S305, S311, S312, S313, S314, S315, S316, S317, S318, S319, S320), wherein said control device (CCU300) is arranged to cause the driving devices (EMD301, EMD302, EMD303, EMD304, EMD305, EMD306) to vary the power rating of the operating status of the system by said solid state switching components (S301, S302, S303, S304, S305, S311, S312, S313, S314, S315, S316, S317, S318, S319, S320) to switch between a state in which all said driving devices (EMD301, EMD302, EMD303, EMD304, EMD305, EMD306) are series connected, a state in which all said driving devices are parallel connected, and states in which some of said driving devices are series connected and some of said driving devices are parallel connected.

3. A driving circuit system (D100; D200; D300) as claimed in claim 1 or claim 2, wherein said driving devices (EMD101, EMD102; EMD201, EMD202; EMD301, EMD302, EMD303, EMD304, EMD305, EMD306) include excitation field windings and armatures of DC series excitation motors.

4. A driving circuit system (D100; D2002; D300) as claimed in claim 1, wherein the driving devices (EMD101, EMD102; EMD201, EMD202; EMD301, EMD203, EMD303, EMD304, EMD305, EMD306) include armatures for controlling and driving DC motors.

5. A driving circuit system (D100; D200; D300) as claimed in claim 1 or claim 2 wherein said driving devices (EMD101, EMD102; EMD201, EMD202; EMD301, EMD302, EMD303, EMD304, EMD305, EMD306) are field windings of AC motors.

6. A driving circuit system (D100, D200, D300) as claimed in claim 1 or claim 2, further comprising diodes (CR200, CR201, CR202) installed in series between one of said driving devices and another of said driving devices.

## Patentansprüche

1. Eine Steuerungsschaltung (D100, D200, D300) für mindestens zwei elektrische Motoren bestehend aus: mindestens zwei Steuerungsschaltungen (EMD 101, EMD 102, EMD 201, EMD 202, EMD 301, EMD 302, EMD 303, EMD 304, EMD 305, EMD 306), die so angeordnet sind, dass sie wenigstens zwei Motoren ansteuern können, wobei wenigstens zwei Steuerungsvorrichtungen untereinander verbunden sind und diese wiederum mit einer Gleichstromstromquelle (DCV100, DCV200, DCV300) in einer Serienschaltung und einer Parallelschaltung angeschlossen sind; wobei die vorgenannte Serienschaltung ein erstes Festkörperschaltungsbauelement (S101, S201, S301, S302, S303, S304, S305) und die vorgenannte Parallelschaltung ein zweites Festkörperschaltungsbauelement (S112, S111, S211, S212, S311, S312, S313, S314, S315, S316, S317, S318, S319, S320) aufweist und außerdem eine Gerätesteuerung aufweist (CCU100, CCU200, CCU300), um die vorgenannten ersten und zweiten Festkörperschaltungsbauelemente (S101, S111, S112, S201, S211, S212, S301, S302, S303, S304, S305, S311, S312, S313, S314, S315, S316, S317, S318) zwischen den Betriebszuständen der vorgenannten Steuerungsvorrichtungen (EMD101, EMD102, EMD201, EMD202, EMD301, EMD302, EMD303, EMD304, EMD305, EMD306), dem Betriebszustand der Reihenschaltung und dem Betriebszustand der Parallelschaltung, umzuschalten, wobei die vorgenannte Steuerungsvorrichtung (CCU100, CCU200, CCU300) so angefahren wird, dass die Schaltungsbauelemente durch eine Impulsdauermodulation gefahren werden und der Gesamtenergieverbrauch der Motoren durch die Impulsdauermodulation überwachbar ist und die Impulsbandbreite den Schaltungsbauelementen (S101, S111, S112, S201, S211, S212, S301, S302, S303, S304, S305, S311, S312, S313, S314, S315, S316, S317, S318, S319, S320) zugeordnet ist; und so ein Arbeitszyklus entsteht, bei dem das System zwischen der Reihenschaltung und der Parallelschaltung kombinierbar ist.

2. Eine Steuerungsschaltung (D300) nach Anspruch 1, **dadurch gekennzeichnet, dass** eine Anzahl der vorgenannten Steuerungsschaltungen (EMD301, EMD302, EMD303, EMD304, EMD305, EMD306) zusammen mit wenigstens drei der vorgenannten Steuerungsschaltungen (EMD301, EMD302, EMD303, EMD304, EMD305, EMD306) mit den jeweils anderen vorgenannten Steuerungsschaltungen verbunden ist, wobei aber wenigstens drei Steuerungsschaltungen mittels einer Reihenschaltung und einer Parallelschaltung miteinander verbunden sind, wobei eines der vorgenannten Festkörperschaltungsbauelemente (S301, S302, S303, S304, S305, S311, S312, S313, S314, S315, S316, S317, S318, S319, S320) enthalten ist, und wobei die vorgenannte Steuerungsschaltung (CCU300) so angeordnet ist, dass sie die Steuerungsschaltungen (EMD301, EMD302, EMD303, EMD304, EMD305, EMD306) dazu veranlasst die Leistung des laufenden Systems durch die Festkörperschaltungsbauelemente (S301, S302, S303, S304, S305, S311, S312, S313, S314, S315, S316, S317, S318, S319, S320) zu variieren, indem zwischen dem Status, in dem alle der vorgenannten Steuerungsschaltungen (EMD301, EMD302, EMD303, EMD304, EMD305, EMD306) entweder in Reihe oder in Parallelschaltung geschaltet sind oder in einem Status geschaltet sind, in denen die vorgenannten Steuerungsschaltungen sowohl in Serienschaltung als auch einige der vorgenannten Steuerungsschaltungen in Parallelschaltung geschaltet sind.

3. Eine Steuerungsschaltung (D100, D200, D300) nach Anspruch 1 oder nach Anspruch 2, **dadurch gekennzeichnet, dass** die vorgenannten Steuerungsschaltungen (EMD101, EMD102, EMD201, EMD202, EMD301, EMD302, EMD303, EMD304, EMD305, EMD306) Erregerfeldwicklungen und Anker für Gleichstromerregermotoren beinhalten.

4. Eine Steuerungsschaltung (D100, D200, D300) nach Anspruch 1, **dadurch gekennzeichnet, dass** die Steuerungsschaltungen (EMD101, EMD102, EMD201, EMD202, EMD301, EMD302, EMD303, EMD304, EMD305, EMD306) Anker zum Regeln und Steuern von Gleichstrommotoren beinhalten.

5. Eine Steuerungsschaltung (D100, D200, D300) nach Anspruch 1 oder nach Anspruch 2, **dadurch gekennzeichnet, dass** die vorgenannten Steuerungsschaltungen (EMD101, EMD102, EMD201, EMD202, EMD301, EMD302, EMD303, EMD304, EMD305, EMD306) Erregerwicklungen von Wechselstrommotoren sind.

6. Eine Steuerungsschaltung (D100, D200, D300) nach Anspruch 1 oder nach Anspruch 2, **dadurch gekennzeichnet, dass** die Steuerungsschaltung ferner Dioden (CR200, CR201, CR202) umfasst und diese zwischen den vorgenannten Steuerungsschaltungen angeordnet sind.

## Revendications

1. Système à circuit de pilotage (D100 ; D200 ; D300) destiné à au moins deux moteurs électriques, comprenant au moins deux dispositifs de pilotage (EMD101, EMD102 ; EMD201, EMD202 ; EMD301, EMD302, EMD303, EMD304, EMD305, EMD306) disposés afin qu'ils pilotent les deux moteurs au moins, les deux dispositifs de pilotage au moins étant connectés mutuellement et à une alimentation en courant continu (DCV100 ; DCV200 ; DCV300) par une connexion en série et une connexion en parallèle, la connexion en série comprenant un premier composant de commutation à semi-conducteur (S101 ; S201 ; S301, S302, S303, S304, S305) et la connexion en parallèle comprenant un second composant de commutation à semi-conducteur (S112 ; S111, S211, S212 ; S311, S312, S313, S314, S315, S316, S317, S318, S319, S320) et un dispositif de commande (CCU100 ; CCU200 ; CCU300) destiné à provoquer la commutation des premier et second composants de commutation à semi-conducteur (S101, S111, S112 ; S201, S211, S212 ; S301, S302, S303, S304, S305, S311, S312, S313, S314, S315, S316, S317, S318) entre un état dans lequel les dispositifs de pilotage (END101, EMD102 ; EMD201, EMD202 ; EMD301, EMD302, EMD303, EMD304, EMD305, EMD306) sont connectés en série et un état dans lequel les dispositifs de pilotage sont connectés en parallèle, dans lequel le dispositif de commande (CCU100 ; CCU200 ; CCU300) assure la commande des composants de commutation par modulation par impulsions de largeur variable, la consommation globale d'énergie des moteurs étant réglée par modulation de la largeur des impulsions appliquées aux composants de commutation (S101, S111, S112 ; S201, S211, S212 ; S301, S302, S303, S304, S305, S311, S312, S313, S314, S315, S316, S317, S318, S319, S320) et donc du coefficient d'utilisation avec lequel le système est commuté entre les combinaisons en série et en parallèle.

2. Système à circuit de pilotage (D300) selon la revendication 1, dans lequel le nombre de dispositifs de pilotage (EMD301, EMD302, EMD303, EMD304, EMD305, EMD306) est au moins égal à trois, chacun des trois dispositifs de pilotage au moins (EMD301, EMD302, EMD303, EMD304, EMD305, EMD306) étant connecté à tous les autres des trois dispositifs de pilotage au moins par une connexion en série et une connexion en parallèle comprenant l'un des composants de commutation à semi-conducteur (S301, S302, S303, S304, S305, S311, S312, S313, S314, S315, S316, S317, S318, S319, S320), dans lequel le dispositif de commande (CCU 300) est destiné à provoquer la variation, par les dispositifs de pilotage (EMD301, EMD302, EMD303, EMD304, EMD305, EMD306), de la puissance nominale à l'état de fonctionnement du système par les composants de commutation à semi-conducteur (S301, S302, S303, S304, S305, S311, S312, S313, S314, S315, S316, S317, S318, S319, S320) afin qu'ils commutent entre un état dans lequel tous les dispositifs de pilotage (EMD301, EMD302, EMD303, EMD304, EMD305, EMD306) sont connectés en série, un état dans lequel tous les dispositifs de pilotage sont connectés en parallèle, et des états dans lesquels certains des dispositifs de pilotage sont connectés en série et certains des dispositifs de pilotage sont connectés en parallèle.

3. Système à circuit de pilotage (D100 ; D200 ; D300) selon la revendication 1 ou 2, dans lequel les dispositifs de pilotage (EMD101, EMD102 ; EMD201, EMD202 ; EMD301, EMD302, EMD303, EMD304, EMD305, EMD306) comprennent des enroulements de champ d'excitation et des armatures de moteur à excitation en série à courant continu.

4. Système à circuit de pilotage (D100 ; D200 ; D300) selon la revendication 1, dans lequel les dispositifs de pilotage (EMD101, EMD102 ; EMD201, EMD202 ; EMD301, EMD302, EMD303, EMD304, EMD305, EMD306) comprennent des armatures destinées à commander et piloter les moteurs à courant continu.

5. Système à circuit de pilotage (D100 ; D200 ; D300) selon la revendication 1 ou 2, dans lequel les dispositifs de pilotage (EMD101, EMD102 ; EMD201, EMD202 ; EMD301, EMD302, EMD303, EMD304, EMD305, EMD306) sont des enroulements de champ de moteur à courant alternatif.

6. Système à circuit de pilotage (D100 ; D200 ; D300) selon la revendication 1 ou 2, comprenant en outre des diodes (CR200, CR201, CR202) installées en série entre l'un des dispositifs de pilotage et un autre des dispositifs de pilotage.
